# EUROPÄISCHE PATENTANMELDUNG

(11) **EP 2 418 115 A2**
(43) Veröffentlichungstag der Anmeldung: **15.02.2012**
(21) Anmeldenummer: 11166308.4
(22) Anmeldetag: 17.05.2011
(51) Int. Cl.: B60L 3/00, B60L 15/20

(54) **Verfahren und System zum Betreiben einer durch einen Wechselrichter angesteuerten elektrischen Maschine in einem Kraftfahrzeug im Fehlerfall**

(30) Priorität: 11.08.2010 DE 102010039190
(71) Anmelder: Robert Bosch GmbH, 70442 Stuttgart (DE)
(72) Erfinder: Schleser, Roland, 66125 Saarbruecken (DE); Kanth, Daniel, 71636 Ludwigsburg (DE); Niemann, Holger, 200120 Shanghai (CN); Heyl, Andreas, 71640 Ludwigsburg (DE)

(57) **Zusammenfassung**

Die Erfindung betrifft Verfahren und Systeme zum Betreiben einer durch einen Wechselrichter (2) angesteuerten elektrischen Maschine (1) in einem Kraftfahrzeug mit einem automatisch oder manuell betätigbaren Getriebe (13), wobei die elektrische Maschine (1) im Generatorbetrieb elektrische Energie erzeugt, welche in einem Energiespeicher (5) gespeichert wird. Im Fehlerfall wird zumindest eine den Ladezustand des Energiespeichers (5) charakterisierende Größe erfasst und mit einem vorgegebenen unteren Schwellwert verglichen und bei Unterschreiten des unteren Schwellwertes wird die elektrische Maschine (1) durch Öffnen aller steuerbaren Schaltelemente (3a-3f) des Wechselrichters (2) in einen Freilauf-Modus geschaltet. Im Fall eines automatisch betätigbaren Getriebes wird zusätzlich eine im Vergleich zu einer aktuellen Getriebeübersetzung höhere Getriebeübersetzung eingestellt. Im Fall eines manuell betätigbaren Getriebes wird stattdessen eine Meldung an den Fahrer ausgegeben, welche ihn auf die Notwendigkeit des Einlegens einer niedrigeren Gangstufe hinweist

## Beschreibung

### Stand der Technik

Elektrische Maschinen mit Wechselrichtern werden zum Beispiel in Hybridfahrzeugen eingesetzt, wo sie wahlweise im Motor- oder Generatorbetrieb betrieben werden. Im Motorbetrieb erzeugt die elektrische Maschine ein zusätzliches Antriebsmoment, welches einen Verbrennungsmotor, zum Beispiel in einer Beschleunigungsphase unterstützt, im Generatorbetrieb erzeugt sie elektrische Energie, die in einem Energiespeicher, wie zum Beispiel einer Batterie oder einem Super-Cab gespeichert wird. Betriebsart und Leistung der elektrischen Maschine werden mittels des Wechselrichters eingestellt.

Da bei Hybridkraftfahrzeugen verhältnismäßig hohe Ströme und Spannungen bereitgestellt werden müssen, um die elektrische Maschine motorisch zum Antreiben des Kraftfahrzeugs verwenden zu können, werden zum Schutz des elektrischen Netzwerks und der an dem elektrischen Netzwerk angeschlossenen Komponenten Betriebsparameter, wie z.B. die Phasenströme der elektrischen Maschine oder die Spannungen am Pulswechselrichter, ständig überwacht.

Bei Erkennung einer Fehlfunktion, wie z.B. eines Phasenüberstromes oder einer Überspannung, wird der Pulswechselrichter in einen sicheren Zustand geschaltet, um eine mögliche Schädigung elektrischer Komponenten zu verhindern. Aus dem Stand der Technik sind im Wesentlichen zwei verschiedene Abschaltverfahren bekannt. Bei einem ersten Verfahren werden sämtliche mit einem niedrigen Potential verbundenen Schalter (Low-Side-Schalter) des Pulswechselrichters geschlossen und alle mit einem hohen Potential verbundenen Schalter (High-Side-Schalter) des Pulswechselrichters geöffnet oder umgekehrt. Diese Betriebsart wird auch als Kurzschluss-Modus bezeichnet. Bei einem anderen Abschaltverfahren werden sämtliche Schalter des Pulswechselrichters geöffnet. Dies wird auch als Freischalt-Modus bezeichnet.

Ein aus der DE 10 2006 003 254 A1 bekanntes Verfahren zum Abschalten einer elektrischen Maschine mit Pulswechselrichter im Falle einer Störung sieht vor, unerwünschte Nebeneffekte beim Abschalten der elektrischen Maschine dadurch zu minimieren und den regulären Maschinenbetrieb zu maximieren, dass die elektrische Maschine zunächst in einen Freischalt-Betrieb, in dem sämtliche Schalter des Pulswechselrichters geöffnet sind, und nachfolgend in einen Kurzschluss-Modus geschaltet wird, in dem die mit dem hohen Potenzial verbundenen Schalter offen und die mit dem niedrigen Potenzial verbundenen Schalter geschlossen sind.

Aus der WO 2008/135327 A1 ist ein Verfahren zur Fehlerbehandlung bei elektrischen Maschinen eines Hybridantriebs bekannt, bei welchem zunächst erfasst wird, ob mindestens ein Betriebsparameter der elektrischen Maschine über einem zugeordneten Betriebsparameter-Grenzwert liegt. Wird dabei erfasst, dass mindestens ein Betriebsparameter über dem zugeordneten Grenzwert liegt, wird ein Versorgungsanschluss der elektrischen Maschine für ein dem Betriebsparameter zugeordnetes Zeitintervall freigeschaltet und der Versorgungsanschluss nach Ablauf des Zeitintervalls auf Masse kurzgeschlossen.

Aus der WO 2009/083342 A1 ist ein Verfahren zu Betreiben eines elektrischen Netzwerks, insbesondere eines Hybrid-Kraftfahrzeuges bekannt, wobei das Netzwerk mindestens einen elektrischen Verbraucher, mindestens eine elektrische Maschine und mindestens einen die elektrische Maschine ansteuernden Wechselrichter aufweist. Bei Erfassen einer Fehlfunktion wird der elektrische Speicher von dem Netzwerk elektrisch getrennt und der Wechselrichter bei anschließendem Überschreiten einer vorgebbaren Spannungsgrenze einer Netzwerkspannung in einen Kurzschluss-Betrieb geschaltet. Dabei ist vorgesehen, dass Leistungshalbleiter des Wechselrichters derart geschaltet werden, dass durch die angetriebene elektrische Maschine eine Spannung induziert und mittels Freilaufdioden am elektrischen Netzwerk bereitgestellt und die induzierte Spannung zum generatorischen Betreiben der elektrischen Maschine verwendet wird, sodass eine vorgebbare Netzwerkspannung durch die elektrische Maschine eingestellt wird.

### Offenbarung der Erfindung

Die vorliegende Erfindung stellt ein Verfahren zum Betreiben einer durch einen Wechselrichter angesteuerten elektrischen Maschine in einem Kraftfahrzeug mit einem automatisch betätigbaren Getriebe bereit, wobei die elektrische Maschine im Generatorbetrieb elektrische Energie erzeugt, welche in einem Energiespeicher gespeichert wird. Erfindungsgemäß wird in einem Fehlerfall zumindest eine den Ladezustand des Energiespeichers charakterisierende Größe, wie z.B. eine Batteriespannung oder ein Batteriestrom, erfasst und mit einem vorgegebenen unteren Schwellwert verglichen. Bei Unterschreiten des unteren Schwellwertes wird die elektrische Maschine durch Öffnen aller steuerbaren Schaltelemente des Wechselrichters in einen Freilauf-Modus geschaltet und in dem automatisch betätigbaren Getriebe wird eine im Vergleich zu einer aktuellen Getriebeübersetzung höhere Getriebeübersetzung eingestellt.

Die vorliegende Erfindung stellt auch ein Verfahren zum Betreiben einer durch einen Wechselrichter angesteuerten elektrischen Maschine in einem Kraftfahrzeug mit einem manuell betätigbaren Getriebe bereit, wobei die elektrische Maschine im Generatorbetrieb elektrische Energie erzeugt, welche in einem Energiespeicher gespeichert wird. Erfindungsgemäß wird in einem Fehlerfall zumindest eine den Ladezustand des Energiespeichers charakterisierende Größe erfasst und mit einem vorgegebenen unteren Schwellwert verglichen. Bei Unterschreiten des unteren Schwellwertes wird die elektrische Maschine durch Öffnen aller steuerbaren Schaltelemente des Wechselrichters in einen Freilauf-Modus geschaltet und eine Meldung an den Fahrer ausgegeben, welche ihn auf die Notwendigkeit des Einlegens einer niedrigeren Gangstufe hinweist.

Die vorliegende Erfindung stellt außerdem ein System zum Betreiben einer durch einen Wechselrichter angesteuerten elektrischen Maschine in einem Kraftfahrzeug mit einem automatisch betätigbaren Getriebe bereit, wobei die elektrische Maschine im Generatorbetrieb elektrische Energie erzeugt, welche in einem Energiespeicher gespeichert wird. Das System umfasst dabei eine Fehler-Detektionseinrichtung, welche eine Fehlfunktion und damit einen Fehlerfall detektiert, eine Ladezustands-Detektionseinrichtung, welche mindestens eine den Ladezustand des Energiespeichers charakterisierende Größe erfasst und mit einem vorgegebenen unteren Schwellwert vergleicht, eine Wechselrichtersteuerung, welche im Fall eines detektierten Fehlerfalles und eines Unterschreitens des unteren Schwellwertes alle steuerbaren Schaltelemente des Wechselrichters öffnet und dadurch die elektrische Maschine in einen Freilauf-Modus schaltet, und eine Getriebesteuerung, welche im Fall eines detektierten Fehlerfalles und eines Unterschreitens des unteren Schwellwertes das automatisch betätigbare Getriebe derart steuert, dass eine im Vergleich zu einer aktuellen Getriebeübersetzung höhere Getriebeübersetzung eingestellt wird.

Die vorliegende Erfindung stellt schließlich ein System zum Betreiben einer durch einen Wechselrichter angesteuerten elektrischen Maschine in einem Kraftfahrzeug mit einem manuell betätigbaren Getriebe bereit, wobei die elektrische Maschine im Generatorbetrieb elektrische Energie erzeugt, welche in einem Energiespeicher gespeichert wird. Das System umfasst dabei eine Fehler-Detektionseinrichtung, welche einen Fehlerfall detektiert, eine Ladezustands-Detektionseinrichtung, welche mindestens eine den Ladezustand des Energiespeichers charakterisierende Größe erfasst und mit einem vorgegebenen unteren Schwellwert vergleicht, eine Wechselrichtersteuerung, welche im Fall eines detektierten Fehlerfalles und eines Unterschreitens des unteren Schwellwertes alle steuerbaren Schaltelemente des Wechselrichters öffnet und dadurch die elektrische Maschine in einen Freilauf-Modus schaltet, und eine Ausgabeeinheit, auf welcher im Fall eines detektierten Fehlerfalles und eines Unterschreitens des unteren Schwellwertes des unteren Schwellwertes eine Meldung an den Fahrer ausgegeben wird, welche ihn auf die Notwendigkeit des Einlegens einer niedrigeren Gangstufe hinweist.

### Vorteile der Erfindung

Bei Kraftfahrzeugen mit zumindest teilweise elektrifizierten Antriebssträngen werden eine Vielzahl von Funktionen, wie, z.B. Bremskraftverstärker, Servolenkung, Licht oder Motorsteuerungen, nur noch elektrisch, das heißt mit Hilfe der in einem Energiespeicher, z.B. Hochvolt- oder Niedervoltbatterie, gespeicherten elektrischen Energie, zur Verfügung gestellt. Wird nun bei einem auftretenden Fehlerfall, welcher sich z.B. durch einen Phasenüberstrom oder eine Überspannung äußert, und welcher dazu führt, dass insbesondere kein geregeltes Drehmoment an der elektrischen Maschine mehr gestellt werden kann, unmittelbar in einen Kurzschluss-Modus geschaltet, so wird der Energiespeicher durch die elektrische Maschine nicht mehr geladen. Dies wiederum hat aber zur Folge, dass die Restreichweite des Kraftfahrzeuges entscheidend durch den Strombedarf der angesprochenen elektrischen Verbraucher erheblich eingeschränkt wird. Dies kann im schlechtesten Fall dazu führen, dass, insbesondere in dünn besiedelten Gebieten oder bei niedrigem Ladezustand des Energiespeichers zum Zeitpunkt des Auftretens des Fehlers, eine Service-Werkstatt nicht mehr erreicht wird. Wird die elektrische Maschine dagegen, wie erfindungsgemäß vorgesehen, im Fehlerfall in einen Freilauf-Modus geschaltet, bietet das im Gegensatz zum Kurzschluss-Modus die Möglichkeit, den Energiespeicher durch den generatorischen Betrieb der elektrischen Maschine auch im Fehlerfall noch zu laden. Dabei werden die Freilaufdioden des Wechselrichters zur Übertragung der Ladeleistung genutzt. Aufgrund des Freilauf-Modus kann jedoch durch den Wechselrichter kein geregeltes Drehmoment mehr an der elektrischen Maschine gestellt werden. Die Erfindung basiert nun auf der Grundidee, die im Freilauf-Modus zur Verfügung stehende Ladeleistung der elektrischen Maschine durch gezielte Beeinflussung der Drehzahl der elektrischen Maschine zu steuern. Demgemäß wird die Drehzahl der elektrischen Maschine bei Unterschreiten eines vorgebbaren Schwellwertes für den Ladezustand des Energiespeichers aktiv erhöht, um dadurch eine verstärkte Ladung des Energiespeichers zu erreichen. Im Fall eines Kraftfahrzeuges mit automatischem Getriebe kann die Drehzahlerhöhung unmittelbar durch automatisches zurückschalten realisiert werden. Ist das Kraftfahrzeug hingegen nur mit einem manuellen Getriebe ausgestattet, so kann ein Zurückschalten nur unter Einbeziehung des Fahrers erfolgen. Daher wird der Fahrer in diesem Fall durch Ausgabe einer entsprechenden Meldung aktiv zum Zurückschalten, also zum Wechsel in eine niedrigere Gangstufe aufgefordert. Der untere Schwellwert wird dabei sinnvoll derart festgelegt, dass der entsprechende Ladezustand des Energiespeichers ausreicht, um alle betriebsnotwendigen elektrischen Verbraucher mit ausreichender elektrischer Energie zu versorgen. Nicht betriebsnotwendige elektrische Verbraucher können im Fehlerfall abgeschaltet werden.

Auf diese Weise wird auch im Fehlerfall stets eine Mindestladung des Energiespeichers gewährleistet, was die Verfügbarkeit des Kraftfahrzeuges erheblich verbessert, so dass ein Liegenbleiben des Kraftfahrzeuges auf freier Strecke vermieden wird.

Um eine Überladung des Energiespeichers sicher zu vermeiden, wird die den Ladezustand des Energiespeichers charakterisierende Größe gemäß einer Ausführungsform der Erfindung auch mit einem vorgegebenen oberen Schwellwert verglichen. Bei Überschreiten des oberen Schwellwertes können unterschiedliche Sicherheitsmaßnahmen ergriffen werden. So kann die elektrische Maschine durch Öffnen aller mit einem hohen Potential verbundenen steuerbaren Schaltelemente des Wechselrichters und Schließen aller mit einem niedrigen Potential verbundenen steuerbaren Schaltelemente des Wechselrichters oder durch Schließen aller mit dem hohen Potential verbundenen steuerbaren Schaltelemente des Wechselrichters und Öffnen aller mit dem niedrigen Potential verbundenen steuerbaren Schaltelemente des Wechselrichters in den Kurzschluss-Modus geschaltet werden, was eine weitere Ladung des Energiespeichers verhindert. Ist das Kraftfahrzeug mit einem automatisch betätigbaren Getriebe ausgestattet, kann alternativ dazu auch automatisch eine im Vergleich zu einer aktuellen Getriebeübersetzung niedrigere Getriebeübersetzung eingestellt werden, was zu einer Verringerung der Ladeleistung führt. Ein Einstellen einer niedrigeren Getriebeübersetzung ist insbesondere dann sinnvoll, wenn ein Kurzschlussbetrieb aufgrund einer Fehlfunktion an einem steuerbaren Schaltelement des Wechselrichters oder der zugehörigen Steuereinheit nicht mehr möglich ist. Ist das Kraftfahrzeug nur mit einem manuell betätigbaren Getriebe ausgestattet, kann bei Überschreiten des oberen Schwellwertes eine Meldung an den Fahrer ausgegeben wird, welche ihn auf die Notwendigkeit des Einlegens einer höheren Gangstufe hinweist.

In bestimmten Betriebssituationen, wie z.B. dem Durchfahren einer Kurve, könnten die mit einer erhöhten Ladeleistung verknüpften Momente allerdings zu einer Destabilisierung des Antriebsstrangs des Fahrzeugs führen. Um dieses sicher zu vermeiden, können die beschriebenen Sicherheitsmaßnahmen (Kurzschluss-Betrieb, automatische Hochschaltung oder Aufforderung zum Hochschalten) auch dann eingeleitet werden, wenn aufgrund einer aktuellen Fahrsituation und aufgrund der mit der aktuellen Ladeleistung verbundenen Momente eine Destabilisierung des Antriebsstrangs zu erwarten ist.

Weitere Merkmale und Vorteile von Ausführungsformen der Erfindung ergeben sich aus der nachfolgenden Beschreibung mit Bezug auf die beigefügten Figuren.

### Kurze Beschreibung der Zeichnungen

Fig. 1 eine schematische Darstellung einer dreiphasigen durch einen Wechselrichter angesteuerten elektrischen Maschine,
Fig. 2 eine schematische Darstellung des erfindungsgemäßen Systems für ein Hybridfahrzeug mit einem automatisch betätigbaren Getriebe und
Fig. 3 eine schematische Darstellung des erfindungsgemäßen Systems für ein Hybridfahrzeug mit einem manuell betätigbaren Getriebe.

### Ausführungsformen der Erfindung

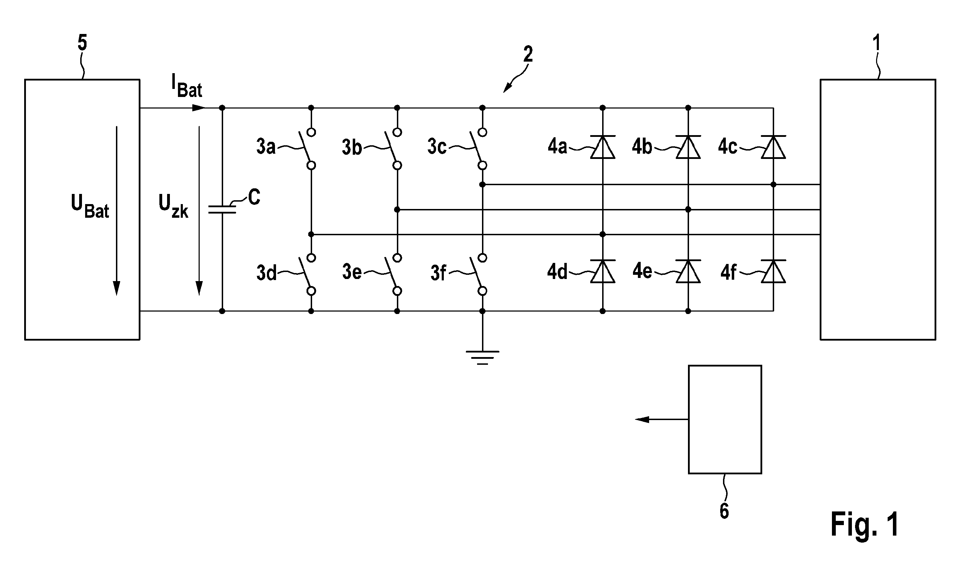

Fig. 1 zeigt eine schematische Darstellung einer elektrischen Maschine 1 mit einem daran angeschlossenen Wechselrichter in Form eines Pulswechselrichters 2. Der Pulswechselrichter 2 umfasst mehrere Leistungsbauelemente - häufig auch als Leistungshalbleiter bezeichnet - in Form von steuerbaren Schaltelementen 3a-3f, welche mit einzelnen Phasen U, V, W der elektrischen Maschine 1 verbunden sind und die Phasen U, V, W entweder gegen ein hohes Versorgungspotential (Batteriespannung U_{Bat}) oder ein niedriges Bezugspotential (Masse) schalten. Die mit dem hohen Versorgungspotential U_{Bat} verbundenen Schaltelemente 3a-3c werden dabei auch als "High-Side-Schalter" und die mit Masse verbunden Schaltelemente 3d-3f als "Low-Side-Schalter" bezeichnet. Der Pulswechselrichter 2 umfasst ferner weitere Leistungsbauelemente in Form von Freilaufdioden 4a-4f, die im dargestellten Ausführungsbeispiel in Form einer sechspulsigen Gleichrichter-Brückenschaltung angeordnet sind. Dabei ist jeweils eine Diode 4a-4f parallel zu einem der Schaltelemente 3a-3f angeordnet. Die Schaltelemente können beispielsweise als IGBTs (Insulated Gate Bipolar Transistors) oder als MOSFETs (Metal Oxide Semiconductor Field-Effect Transistors) ausgeführt sein.

Der Pulswechselrichter 2 bestimmt Leistung und Betriebsart der elektrischen Maschine 1 und wird von einer Wechselrichtersteuerung 6 entsprechend angesteuert. Die elektrische Maschine 1 kann somit wahlweise im Motor- oder Generatorbetrieb betrieben werden. Im Motorbetrieb erzeugt sie ein zusätzliches Antriebsmoment, das einen nicht dargestellten Verbrennungsmotor z.B. in einer Beschleunigungsphase unterstützt. Im Generatorbetrieb wird dagegen mechanische Energie in elektrische Energie gewandelt und in einem Energiespeicher 5, hier einer Batterie, gespeichert. Der Energiespeicher 5 ist mit einem nicht dargestellten Energieversorgungsnetz in einem Kraftfahrzeug verbunden, wobei der Energiespeicher als Hochvoltbatterie und das Energieversorgungsnetz zum Beispiel als Hochvolt-Traktionsnetz in einem Hybridfahrzeug ausgeführt sein kann.

Parallel zum Pulswechselrichter 2 ist ein so genannter Zwischenkreis-Kondensator C angeordnet, der im Wesentlichen zur Stabilisierung der Batterie-Spannung U_{Bat} dient und an welchem eine Zwischenkreisspannung U_{zk} anliegt.

Die elektrische Maschine 1 ist im dargestellten Ausführungsbeispiel dreiphasig ausgeführt, kann aber auch weniger oder mehr als drei Phasen aufweisen.

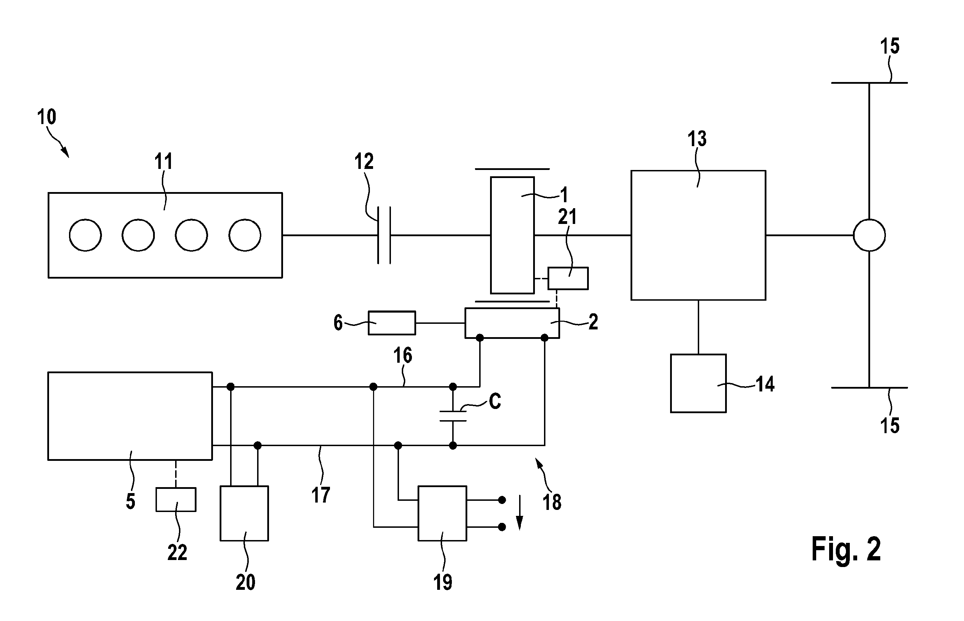

Figur 2 zeigt schematisch die Einbindung einer durch den Wechselrichter 2 gesteuerten elektrischen Maschine 1 in einen Antriebsstrang 10 eines nicht weiter dargestellten Hybridfahrzeugs. Der Antriebsstrang 10 weist einen Verbrennungsmotor 11 auf, welcher mittels einer Kupplung 12 mit der elektrischen Maschine 1 mechanisch wirkverbindbar ist. Dabei stehen sowohl der Verbrennungsmotor 11 als auch die elektrische Maschine 1 als Antriebsaggregate für das Hybridfahrzeug zur Verfügung. Der Antriebsstrang 10 umfasst außerdem ein mit der elektrischen Maschine 1 mechanisch wirkverbundenes automatisch betätigbares Getriebe 13, welches durch eine Getriebesteuerung 14 gesteuert wird und das von den Antriebsaggregaten erzeugte Drehmoment auf Antriebsräder 15 des Kraftfahrzeugs weiterleitet. Der elektrischen Maschine 1 ist entsprechend Fig. 1 der Pulswechselrichter 2 zugeordnet, mittels dessen die elektrische Maschine 1 angesteuert wird und welcher selbst durch die Wechselrichtersteuerung 6 gesteuert wird. Der Pulswechselrichter 2 ist mittels elektrischer Verbindungen 16 und 17 mit dem elektrischen Energiespeicher 5, insbesondere in Form einer Hochvoltbatterie, verbunden. An diesen, durch den Wechselrichter 2, den Energiespeicher 5 sowie die elektrischen Verbindungen 16 und 17 gebildeten Zwischenkreis 18 ist weiterhin ein Gleichstromwandler 19 sowie mindestens ein Hochvoltverbraucher 20 angeschlossen. Zur Stabilisierung der Spannung des Energiespeichers 5 ist analog zu Fig. 1 parallel zum Pulswechselrichter 2 der Zwischenkreis-Kondensator C geschaltet.

Zum Schutz des elektrischen Netzwerks und der an dem elektrischen Netzwerk angeschlossenen Komponenten ist vorgesehen, dass ein Fehlerfall in dem elektrischen Netzwerk mit Hilfe einer Fehler-Detektionseinrichtung 21 detektiert wird. Die Fehler-Detektionseinrichtung 21 kann z.B. durch mindestens eine Sensoreinheit inklusive zugehöriger Auswerteinheit realisiert sein, welche den Pulswechselrichter 2 und/oder die elektrische Maschine 1 auf Überströme und/oder Überspannungen überwacht. Außerdem wird mit Hilfe einer Ladezustands-Detektionseinrichtung 22 mindestens eine den Ladezustand des Energiespeichers charakterisierende Größe, wie z.B. ein Batteriestrom oder eine Batteriespannung, erfasst und mit einem vorgebbaren unteren Schwellwert verglichen. Die Wechselrichtersteuerung 6, welche die steuerbaren Schaltelemente 3a-3f (vgl. Fig. 1) des Pulswechselrichters 2 ansteuert, öffnet im Fall eines detektierten Fehlerfalles und eines Unterschreitens des unteren Schwellwertes alle steuerbaren Schaltelemente 3a-3f des Pulswechselrichters 2 und schaltet dadurch die elektrische Maschine 1 in einen Freilauf-Modus. Außerdem steuert die Getriebesteuerung 14 im Fall eines detektierten Fehlerfalles und eines Unterschreitens des unteren Schwellwertes das automatisch betätigbare Getriebe 13 derart, dass eine im Vergleich zu einer aktuellen Getriebeübersetzung höhere Getriebeübersetzung eingestellt wird. Auf diese Weise wird die Drehzahl der generatorisch betriebenen elektrischen Maschine 1 erhöht und dadurch die Ladeleistung für den Energiespeicher 5 gesteigert. Ein Absinken der Ladung des Energiespeichers 5 unterhalb des vorgebbaren Schwellwertes kann damit sicher vermieden werden, so dass eine erhöhte Verfügbarkeit des Kraftfahrzeuges gewährleistet ist. Die Informationsübertragung zwischen den einzelnen Detektions- und Steuerungskomponenten kann dabei entweder direkt oder indirekt über eine übergeordnete Steuereinheit, welche auch in eine der vorhandenen Steuereinheiten integriert sein kann, erfolgen. Entsprechende Leitungsverbindungen sind aber aus Gründen der Übersichtlichkeit nicht dargestellt.

Um eine Überladung des Energiespeichers 5 sicher zu vermeiden, kann die den Ladezustand des Energiespeichers 5 charakterisierende Größe zusätzlich mit einem vorgebbaren oberen Schwellwert verglichen werden. Bei Überschreiten des oberen Schwellwertes kann die elektrische Maschine 1 durch Öffnen aller High-Side-Schalter 3a-3c des Pulswechselrichters 2 und Schließen aller Low-Side-Schalter 3d-3f des Pulswechselrichters 2 oder umgekehrt in den Kurzschluss-Modus geschaltet werden, so dass der Energiespeicher 5 nicht mehr weiter geladen wird. Alternativ dazu kann über die Getriebesteuerung 14 auch automatisch eine im Vergleich zu einer aktuellen Getriebeübersetzung niedrigere Getriebeübersetzung eingestellt werden, was zu einer Verringerung der Drehzahl der elektrischen Maschine 1 und damit zu einer Reduzierung der Ladeleistung führt.

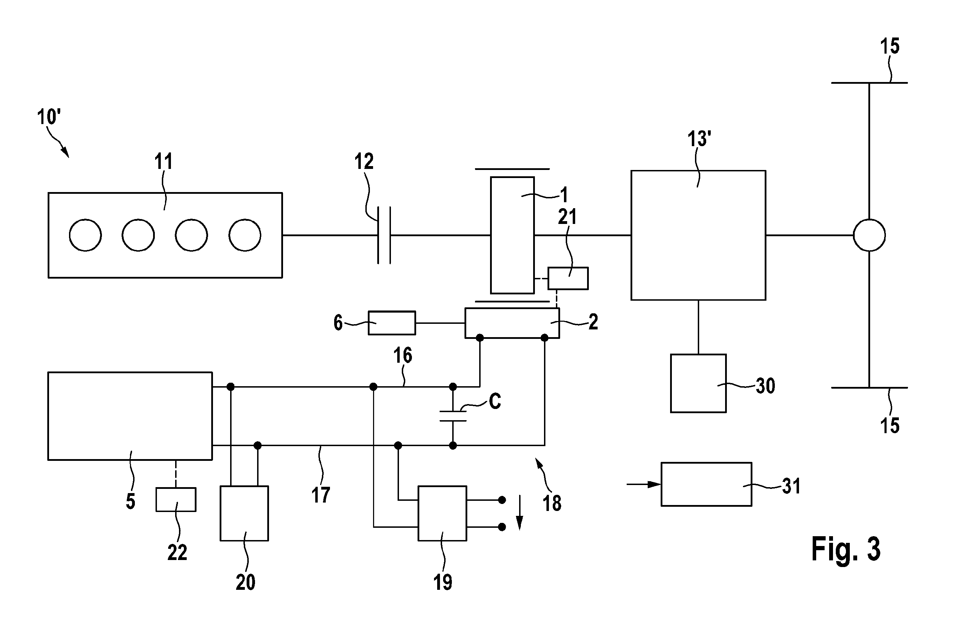

Figur 3 zeigt schematisch eine weitere Ausführungsform eines Antriebsstrangs 10' eines nicht weiter dargestellten Hybridfahrzeugs. Der Antriebsstrang 10' unterscheidet sich dabei von dem in Fig. 2 dargestellten Antriebsstrang 10 lediglich dadurch, dass anstatt des automatisch betätigbaren Getriebes 13 ein manuell über ein Bedienelement 30, z.B. in Form eines Gangwahlhebels, betätigbares Getriebe 13' aufweist. Da in diesem Fall kein automatischer Übersetzungs- oder Gangwechsel möglich ist, ist eine Ausgabeeinheit 31 vorgesehen, auf welcher im Fall eines detektierten Fehlerfalles und eines Unterschreitens des unteren Schwellwertes eine Meldung an den Fahrer ausgegeben wird, welche ihn auf die Notwendigkeit des Einlegens einer niedrigeren Gangstufe hinweist. Die Meldung kann dabei visuell in Form einer Anzeige oder auch akustisch, z.B. in Form einer Sprachmeldung, ausgegeben werden. Die Informationsübertragung zwischen den einzelnen Detektions- und Steuerungskomponenten sowie der Ausgabeeinheit kann auch dabei entweder direkt oder indirekt über eine übergeordnete Steuereinheit, welche auch in eine der vorhandenen Steuereinheiten integriert sein kann, erfolgen. Entsprechende Leitungsverbindungen sind auch hier aus Gründen der Übersichtlichkeit nicht dargestellt.

Ist das Kraftfahrzeug nur mit einem manuell betätigbaren Getriebe ausgestattet, kann es zur Vermeidung einer Überladung des Energiespeichers 5 auch bei einem Antriebsstrang 10' gemäß Figur 3 sinnvoll sein, eine im Vergleich zu einer aktuellen Getriebeübersetzung niedrigere Getriebeübersetzung einzustellen, um eine Verringerung der Drehzahl der elektrischen Maschine 1 und damit eine Reduzierung der Ladeleistung zu erreichen. Da aber bei einem manuell betätigbaren Getriebe 13' kein automatischer Übersetzungs- oder Gangwechsel möglich ist, kann bei Überschreiten des oberen Schwellwertes für die den Ladezustand des Energiespeichers 5 charakterisierende Größe eine Meldung an den Fahrer ausgegeben wird, welche ihn auf die Notwendigkeit des Einlegens einer höheren Gangstufe hinweist.

## Patentansprüche

1. Verfahren zum Betreiben einer durch einen Wechselrichter (2) angesteuerten elektrischen Maschine (1) in einem Kraftfahrzeug mit einem automatisch betätigbaren Getriebe (13), wobei die elektrische Maschine (1) im Generatorbetrieb elektrische Energie erzeugt, welche in einem Energiespeicher (5) gespeichert wird, bei dem im Fehlerfall
- zumindest eine den Ladezustand des Energiespeichers (5) charakterisierende Größe erfasst und mit einem vorgegebenen unteren Schwellwert verglichen wird, und
- bei Unterschreiten des unteren Schwellwertes
■ die elektrische Maschine (1) durch Öffnen aller steuerbaren Schaltelemente (3a-3f) des Wechselrichters (2) in einen Freilauf-Modus geschaltet wird und
■ in dem automatisch betätigbaren Getriebe (13) eine im Vergleich zu einer aktuellen Getriebeübersetzung höhere Getriebeübersetzung eingestellt wird.

2. Verfahren nach Anspruch 1, wobei die den Ladezustand des Energiespeichers (5) charakterisierende Größe mit einem vorgegebenen oberen Schwellwert verglichen wird und bei Überschreiten des oberen Schwellwertes in dem automatisch betätigbaren Getriebe (13) eine im Vergleich zu einer aktuellen Getriebeübersetzung niedrigere Getriebeübersetzung eingestellt wird.

3. Verfahren zum Betreiben einer durch einen Wechselrichter (2) angesteuerten elektrischen Maschine (1) in einem Kraftfahrzeug mit einem manuell betätigbaren Getriebe (13'), wobei die elektrische Maschine (1) im Generatorbetrieb elektrische Energie erzeugt, welche in einem Energiespeicher (5) gespeichert wird, bei dem im Fehlerfall
- mindestens eine den Ladezustand des Energiespeichers (5) charakterisierende Größe erfasst und mit einem vorgegebenen unteren Schwellwert verglichen wird und
- bei Unterschreiten des unteren Schwellwertes
■ die elektrische Maschine (1) durch Öffnen aller steuerbaren Schaltelemente (3a-3f) des Wechselrichters (2) in einen Freilauf-Modus geschaltet wird und
■ eine Meldung an den Fahrer ausgegeben wird, welche ihn auf die Notwendigkeit des Einlegens einer niedrigeren Gangstufe hinweist.

4. Verfahren nach Anspruch 3, wobei die den Ladezustand des Energiespeichers (5) charakterisierende Größe mit einem vorgegebenen oberen Schwellwert verglichen wird und bei Überschreiten des oberen Schwellwertes eine Meldung an den Fahrer ausgegeben wird, welche ihn auf die Notwendigkeit des Einlegens einer höheren Gangstufe hinweist.

5. Verfahren nach einem der Ansprüche 1 oder 3, wobei die den Ladezustand des Energiespeichers (5) charakterisierende Größe mit einem vorgegebenen oberen Schwellwert verglichen wird und bei Überschreiten des oberen Schwellwertes die elektrische Maschine (1) durch Öffnen aller mit einem hohen Potential verbundenen steuerbaren Schaltelemente (3a-3c) des Wechselrichters (2) und Schließen aller mit einem niedrigen Potential verbundenen steuerbaren Schaltelemente (3d-3f) des Wechselrichters (2) oder durch Schließen aller mit dem hohen Potential verbundenen steuerbaren Schaltelemente (3a-3c) des Wechselrichters (2) und Öffnen aller mit dem niedrigen Potential verbundenen steuerbaren Schaltelemente (3d-3f) des Wechselrichters (2) in einen Kurzschluss-Modus geschaltet wird.

6. System zum Betreiben einer durch einen Wechselrichter (2) angesteuerten elektrischen Maschine (1) in einem Kraftfahrzeug mit einem automatisch betätigbaren Getriebe (13), wobei die elektrische Maschine (1) im Generatorbetrieb elektrische Energie erzeugt, welche in einem Energiespeicher (5) gespeichert wird, mit
- einer Fehler-Detektionseinrichtung (21), welche einen Fehlerfall detektiert,
- einer Ladezustands-Detektionseinrichtung (22), welche mindestens eine den Ladezustand des Energiespeichers (5) charakterisierende Größe erfasst und mit einem vorgegebenen unteren Schwellwert vergleicht,
- einer Wechselrichtersteuerung (6), welche im Fall eines detektierten Fehlerfalles und eines Unterschreitens des unteren Schwellwertes alle steuerbaren Schaltelemente (3a-3f) des Wechselrichters (2) öffnet und dadurch die elektrische Maschine (1) in einen Freilauf-Modus schaltet, und
- einer Getriebesteuerung (14), welche im Fall eines detektierten Fehlerfalles und eines Unterschreitens des unteren Schwellwertes das automatisch betätigbare Getriebe (13) bei Unterschreiten des unteren Schwellwertes derart steuert, dass eine im Vergleich zu einer aktuellen Getriebeübersetzung höhere Getriebeübersetzung eingestellt wird.

7. System zum Betreiben einer durch einen Wechselrichter (2) angesteuerten elektrischen Maschine (1) in einem Kraftfahrzeug mit einem manuell betätigbaren Getriebe (13'), wobei die elektrische Maschine (1) im Generatorbetrieb elektrische Energie erzeugt, welche in einem Energiespeicher (5) gespeichert wird, mit
- einer Fehler-Detektionseinrichtung (21), welche einen Fehlerfall detektiert,
- einer Ladezustands-Detektionseinrichtung (22), welche eine den Ladezustand des Energiespeichers (5) charakterisierende Größe erfasst und mit einem vorgegebenen unteren Schwellwert vergleicht,
- einer Wechselrichtersteuerung (6), welche im Fall eines detektierten Fehlerfalles und eines Unterschreitens des unteren Schwellwertes alle steuerbaren Schaltelemente (3a-3f) des Wechselrichters (2) öffnet und dadurch die elektrische Maschine (1) in einen Freilauf-Modus schaltet, und
- eine Ausgabeeinheit (31), auf welcher im Fall eines detektierten Fehlerfalles und eines Unterschreitens des unteren Schwellwertes eine Meldung an den Fahrer ausgegeben wird, welche ihn auf die Notwendigkeit des Einlegens einer niedrigeren Gangstufe hinweist.
